# EUROPÄISCHE PATENTSCHRIFT

(11) **EP 2 607 180 B1**
(45) Veröffentlichungstag und Bekanntmachung des Hinweises auf die Patenterteilung: **20.05.2015**
(21) Anmeldenummer: 12007838.1
(22) Anmeldetag: 21.11.2012
(51) Int. Cl.: B60R 21/015

(54) **Verfahren zur Insassengewichtsbestimmung zumindest eines Fahrzeuginsassen**
Method for the determination of the weight of at least one occupant of a vehicle
Procédé de détermination du poids d'occupants d'au moins un occupant d'un véhicule

(30) Priorität: 21.12.2011 DE 102011121871
(43) Veröffentlichungstag der Anmeldung: 26.06.2013
(73) Patentinhaber: AUDI AG, 85045 Ingolstadt (DE)
(72) Erfinder: Fürst, Franz, 85114 Buxheim (DE)
(74) Vertreter: Thielmann, Frank

(56) Entgegenhaltungen:
- DE-A1- 10 009 540

## Beschreibung

Die Erfindung betrifft ein Verfahren zur Insassengewichtsbestimmung zumindest eines Fahrzeuginsassen eines Kraftfahrzeugs mit einer auf einem Fahrwerk aufgebauten und darauf lastenden Fahrzeugkarosserie. Die Erfindung betrifft ebenfalls ein solches Kraftfahrzeug.

Aus dem Stand der Technik sind Kraftfahrzeuge mit reversiblen und/oder irreversiblen Insassenschutzmittel bekannt. Reversible Insassenschutzmittel sind beispielsweise als Gurtstraffer ausgeführt, die bei einer unmittelbar bevorstehenden Kollision des Kraftfahrzeugs angesteuert werden, um eine gefährliche Vorwärtsneigung des Körpers eines Fahrzeuginsassen zu unterbinden. Irreversible Insassenschutzmittel werden typischerweise pyrotechnisch ausgelöst und können insbesondere Airbags umfassen. Zur Auslösung der Insassenschutzmittel sind dem Stand der Technik Insassenschutzsysteme zu entnehmen, die bei einer erkannten und unmittelbar bevorstehenden Kollisionsgefahr die Insassenschutzmittel entsprechend ansteuern.

Aus der Druckschrift DE 100 09 540 A1 ist ein Verfahren beschrieben, welches zur Insassengewichtsbestimmung zumindest eines Fahrzeuginsassen eines Kraftfahrzeugs mit einer auf einem Fahrwerk aufgebauten und darauf lastenden Fahrzeugkarosserie dient, wobei eine auf das Fahrwerk einwirkende Last zu einem vor einem Einsteigen des zumindest einen Fahrzeuginsassen in das Kraftfahrzeug liegenden ersten Zeitpunkt als erster Gewichtswert erfasst wird und die auf das Fahrwerk einwirkende Last zu einem nach dem Einsteigen des zumindest einen Fahrzeuginsassen in das Kraftfahrzeug liegenden zweiten Zeitpunkt als zweiter Gewichtswert erfasst wird, wobei ein Insassengewicht des zumindest einen Fahrzeuginsassen unter Differenzbildung des ersten Gewichts von dem zweiten Gewicht ermittelt wird.

Die Druckschrift DE100 09 540 A1 beschreibt weiter ein Kraftfahrzeug umfassend eine auf einem Fahrwerk aufgebaute und darauf lastende Fahrzeugkarosserie mit einem Karosseriegewicht und einer Vorrichtung zur Insassengewichtsbestimmung zumindest eines Fahrzeuginsassen, welche zur Durchführung eines Verfahrens nach einem der vorherigen Ansprüche ausgebildet ist, wobei mittels zumindest einem Sensor eine auf das Fahrwerk einwirkende Last erfassbar ist, welcher Sensor mit einer Auswerteeinheit zur Ermittlung des Insassengewichts des zumindest einen Fahrzeuginsassen in einer Wirkverbindung steht.

Aus der Druckschrift DE 102 49 440 A1 ist ein Insassenschutzsystem beschrieben, welches mittels Kraftsensoren insassenbezogene Gewichtskräfte erfasst. Die Gewichtssensierung der Insassen ist für eine individuelle personenbezogene Ansteuerung des Insassenschutzsystems vorgesehen. Dabei ist ein Airbag in Abhängigkeit des erfassten Insassengewichts ansteuerbar, so dass eine Verletzungsgefahr des Fahrzeugsinsassen bei Auslösung des Airbags minimiert ist. Die Kraftsensoren sind als Dehnungsstreifen-Kraftaufnehmer, induktive Sensoren und/oder piezoelektrische Sensoren vorgesehen.

Ferner ist aus der Druckschrift DE 100 47 193 C2 ein Verfahren zur Insassenklassifizierung im Kraftfahrzeug beschrieben. Zur Insassenklassifizierung wird das Insassengewicht eines auf einem Fahrzeugsitz sitzenden Fahrzeuginsassen bestimmt. Der Fahrzeugsitz ist mit einer Sitzmatte ausgestattet, welche eine Sensormatrix aufweist. Mittels der Sensormatrix ist das Insassengewicht des Fahrzeuginsassen zumindest abschätzbar. Die so gewonnene Information über das Insassengewicht ist einer Steuereinheit für das Insassenschutzmittel zuführbar, so dass das Insassenschutzmittel in Abhängigkeit des Insassengewichts ansteuerbar ist.

Ausgehend von diesem Stand der Technik ist es Aufgabe der vorliegenden Erfindung, ein verbessertes Verfahren zur Insassengewichtsbestimmung des zumindest einen Fahrzeuginsassen des Kraftfahrzeugs anzugeben, welches insbesondere kostengünstig im Kraftfahrzeug implementierbar ist.

Zur Lösung der Aufgabe wird bei einem Verfahren der Eingangs genannten Art erfindungsgemäß eine auf das Fahrwerk einwirkende Last zu einem vor einem Einsteigen des zumindest einen Fahrzeuginsassen in das Kraftfahrzeug liegenden ersten Zeitpunkt als erster Gewichtswert erfasst und die auf das Fahrwerk einwirkende Last zu einem nach dem Einsteigen des zumindest einen Fahrzeuginsassen in das Kraftfahrzeug liegenden zweiten Zeitpunkt also zweiter Gewichtswert erfasst, wobei ein Insassengewicht des zumindest einen Fahrzeuginsassen unter Differenzbildung des ersten Gewichtswerts von dem zweiten Gewichtswert ermittelt wird.

Die auf das Fahrwerk einwirkende Last wird von dem Gewicht der Fahrzeugkarosserie, die den gesamten Fahrzeugaufbau umfasst, einer etwaigen Zuladung des Kraftfahrzeugs und der Summe der Insassengewichte verursacht.

Das erfindungsgemäße Verfahren vermeidet die Anordnung von kostspieligen Gewichtssensoren in den Fahrzeugsitzen. Ferner weist das anhand dem Verfahren bestimmte Insassengewicht eine erhöhte Genauigkeit auf, da störende Effekte, die daher rühren, dass der Fahrzeuginsasse sich immer, wenn er sich auf dem Fahrzeugsitz befindet, auch gleichzeitig an anderen Stellen, beispielsweise mit den Füßen abstützt, vermieden sind.

In der Erfindung wird mittels zumindest einem Sensor die auf das Fahrwerk einwirkende Last kontinuierlich erfasst. Ändert sich der kontinuierlich erfasste Gewichtswert in einem vorgebbaren Zeitintervall hinreichend schnell, so wird diese so erfasste Veränderung mit einem Einsteigen des zumindest einen Fahrzeuginsassen in das Kraftfahrzeug identifiziert. Dabei kann beispielsweise vorgesehen sein, dass die erfasste Änderung des Gewichtswerts innerhalb des Zeitintervalls derart hinreichend groß und schnell erfolgt, dass ein Betanken des Kraftfahrzeugs nicht irrtümlicherweise als ein Einsteigen des zumindest einen Fahrzeuginsassen ausgewertet wird.

Auch bei der kontinuierlichen Erfassung des Gewichtswerts wird der erste Gewichtswert zu dem ersten Zeitpunkt und der zweite Gewichtswert zu dem zweiten Zeitpunkt erfasst. Entsprechend wird der erste Zeitpunkt mit dem Zeitraum vor der erfassten Änderung des Gewichtswerts identifiziert und der zweite Zeitpunkt mit dem Zeitraum nach der erfassten Änderung identifiziert. Daraufhin wird der zweite Gewichtswert von dem ersten Gewichtswert subtrahiert und die so gebildete Differenz mit dem Insassengewicht des eingestiegenen Fahrzeuginsassen identifiziert.

In bevorzugten Ausführungsbeispielen der Erfindung sind weitere Sensoren vorgesehen, die dazu verwendet werden, einen Einsteigevorgang des zumindest einen Fahrzeuginsassen zu erfassen und damit den ersten und den zweiten Zeitpunkt zu bestimmen.

Vorzugsweise wird der erste Zeitpunkt dadurch definiert, dass das Kraftfahrzeug von einem geschlossenen Zustand in einen zumindest teilgeöffneten Zustand übergeht. Dabei wird der geschlossene Zustand des Kraftfahrzeugs dadurch definiert, dass alle Fahrzeugtüren gegebenenfalls mit Ausnahme einer Heckklappe oder Hecktür geschlossen sind. Ein solcher Zustand ist beispielsweise mittels weiterer Sensoren, welche als Türkontaktsensoren ausgebildet sind, erfassbar. Alternativ oder zusätzlich wird der Zustand zumindest eines der jeweiligen Fahrzeugtür zugeordneten Sperrmittels überprüft. Das Entriegeln der Fahrzeugtür, welches mit dem Lösen des der Fahrzeugtür zugeordneten Sperrmittels einhergeht, wird mit einem unmittelbar bevorstehenden Einsteigen des zumindest einen Fahrzeuginsassen identifiziert und der erste Gewichtswert bestimmt.

Der zweite Zeitpunkt wird bevorzugter Weise dadurch definiert, dass das Kraftfahrzeug von dem zumindest teilgeöffneten Zustand zurück in den geschlossenen Zustand übergeht. Auch hier kann vorgesehen sein, den Zustand des zu der Fahrzeugtür zugeordneten Sperrmittels zu überprüfen. Insbesondere bei Kraftfahrzeugen, welche über eine Türschlossautomatik verfügen, die eine automatische Verriegelung nach einem Anfahren des Kraftfahrzeugs automatisch betätigt, kann der zweite Zeitpunkt mit dem Zeitpunkt des Wiederverschließens der Fahrzeugtür identifiziert werden.

In alternativen Ausführungsbeispielen der Erfindung wird der zweite Zeitpunkt mit der Betätigung eines Anlassers des Kraftfahrzeugs oder mit einem Anfahren des Kraftfahrzeugs identifiziert.

Bei Kraftfahrzeugen mit Zentralverriegelung ist vorgesehen, den Zustand der zumindest einen Fahrzeugtür anhand des Betriebszustands eines für die Zentralverriegelung vorgesehenen zentralen Steuergeräts zu überprüfen.

Steigen mehrere Fahrzeuginsassen in das Kraftfahrzeug gleichzeitig ein, so kann eine Bestimmung der individuellen Insassengewichte anhand der ermittelten Änderung des Gewichtswerts problematisch sein. Daher ist vorgesehen, eine Gewichtsverteilung von Insassengewichte im Fahrzeuginnenraum zu ermitteln oder zumindest anhand von Plausibilitätsannahmen abzuschätzen. Vorteilhafterweise wird dazu eine Sitzbelegung fahrzeuginnenseitig erfasst. Dazu sind alle Fahrzeugsitze mit entsprechenden Sitzbelegungssensoren ausgestattet, mittels denen erfassbar ist, ob sich auf dem jeweiligen Fahrzeugsitz ein Fahrzeuginsasse befindet. Die Sitzbelegungssensoren können beispielsweise als einfache Schalter, Gurtschlosssensoren oder kapazitive Sensoren ausgebildet sein. Alternativ oder zusätzlich kann die Sitzbelegung mittels einer fahrzeuginnenseitig angeordneten optischen Erfassungseinheit, wie insbesondere einer Kamera, erfasst werden. Dies hat den zusätzlichen Vorteil, dass anhand einer entsprechenden Bilderfassung Plausibilitätsannahmen über das jeweilige Insassengewicht des Fahrzeuginsassens anhand der optisch erfassten Daten durchgeführt werden kann. Wird beispielsweise optisch erfasst, dass auf einem Fahrersitz ein erwachsener Mann Platz genommen hat und auf einer Rücksitzbank ein Kind, so wird standardmäßig dem männlichen Fahrer ein Insassengewicht zugeordnet, welches beispielsweise 2/3 der Differenz der ersten und zweiten Gewichtswerte entspricht. In einem weitergehenden Ausführungsbeispiel ist die Bilderkennung und die Bilderfassung derart ausgebildet, dass anhand des jeweiligen optischen Erscheinungsbild der Fahrzeuginsassen das dazugehörige Insassengewicht des Fahrzeuginsassen abgeschätzt wird. Die ermittelte Differenz der ersten und zweiten Gewichtswerte wird entsprechend den einzelnen Gewichtsanteilen der vorhandenen Fahrzeuginsassen zugeteilt.

Mittels der Sensoren ist das Karosseriegewicht des Kraftfahrzeugs erfassbar. Die Sensoren sind zwischen einem Fahrwerk des Kraftfahrzeugs und der Fahrzeugkarosserie, insbesondere im Bereich einer Radaufhängung angeordnet. Dies ermöglicht eine Erfassung von während der Fahrt auftretenden und auf die Fahrzeugkarosserie einwirkenden dynamischen Lasten. Die dynamischen Lasten bestimmen das Schwingungsverhalten der Fahrzeugkarosserie bezüglich des Fahrwerks, wobei die auftretenden dynamischen Lasten zur Ermittlung der Gewichtsverteilung innerhalb des Fahrzeuginnenraums analysiert werden. Dabei kann insbesondere eine Analyse der auftretenden Schwingungsmoden durchgeführt werden.

Bevorzugter Weise werden bei der Ermittlung der Gewichtsverteilung zuvor fahrzeugseitig abgespeicherte Fahrparameterwerte und/oder insassenbezogene Parameterwerte, insbesondere zur Bestimmung der Plausibilitätsannahmen berücksichtigt. Als Fahrparameterwerte kommen insbesondere die dynamischen Lasten in Betracht, die bei einer vorherigen Fahrt des Kraftfahrzeugs aufgetreten sind. Entsprechend kommen als insassenbezogene Parameterwerte insbesondere Insassengewichte in Betracht, die bei der vorherigen Fahrt des Kraftfahrzeugs ermittelt worden sind. Durch einen Vergleich der zuvor erfassten Fahrparameterwerte und/oder der zuvor erfassten insassenbezogenen Parameterwerte mit den entsprechenden aktuellen Werten lässt sich die Analyse zur Ermittlung der Gewichtsverteilung vereinfachen. So kann beispielsweise ein zuvor ermitteltes Insassengewicht des Fahrers zunächst standardmäßig dem Fahrersitz zugeordnet werden, insbesondere dann, wenn die zuvor erfassten Daten suggerieren, dass das Kraftfahrzeug meist von dem gleichen Fahrer gefahren wird. Dies reduziert bei der Ermittlung der Gewichtsverteilung die Anzahl der freien Parameter, so dass unter diesen Plausibilitätsannahmen die Verteilung der Insassengewichte auf den einzelnen Fahrzeugsitzen schnell zugeordnet werden kann. Mittels der Analyse der aktuell erfassten dynamischen Lasten wird dann überprüft, ob die zugeordnete Gewichtsverteilung konsistent ist. Gegebenenfalls wird dann die Gewichtsverteilung angepasst, bis die auftretenden dynamischen Lasten konsistent mit der ermittelten Gewichtsverteilung sind.

Zumindest ein Insassenschutzmittel des Kraftfahrzeugs wird in Abhängigkeit des ermittelten Insassengewichts angesteuert. Dabei kann das Insassenschutzmittel reversibel oder irreversibel und insbesondere als Airbag oder Gurtstraffer ausgebildet sein. Das dem Fahrzeugsitz bzw. das dem Fahrzeugsitzplatz zugeordnete Insassenschutzmittel weist eine Auslöscharakteristik auf, die in Abhängigkeit von dem Insassengewicht des auf dem Fahrzeugsitz bzw. dem Fahrzeugsitzplatz befindlichen Fahrzeuginsassen verändert wird. So wird beispielsweise die Füllmenge oder die Geschwindigkeit, mit der ein Gas in einen Airbag strömt, verringert, wenn der auf dem Fahrzeugssitz sitzende Fahrzeuginsasse besonders leicht ist. Entsprechend kann in diesem Fall ebenso vorgesehen sein, eine Rückhaltekraft des zu dem Fahrzeugsitz zugeordneten Gurtstraffers zu verringern. Dadurch kann die Gefahr der Verletzung des Fahrzeuginsassen bei der Auslösung des Insassenschutzmittels minimiert werden.

Ferner wird die Aufgabe gelöst durch das Kraftfahrzeug, welches die auf dem Fahrwerk aufgebaute und darauf lastende Fahrzeugkarosserie und eine Vorrichtung zur Insassengewichtsbestimmung des zumindest einen Fahrzeuginsassen umfasst. Die Vorrichtung zur Insassengewichtsbestimmung ist zur Durchführung des erfindungsgemäßen Verfahrens ausgebildet. Dabei weist die Vorrichtung den zumindest einen Sensor zur Bestimmung der auf das Fahrwerk einwirkenden Last auf, welcher mit einer Auswerteeinheit zur Ermittlung des Insassengewichts des zumindest einen Fahrzeuginsassen in einer Wirkverbindung steht. Für das Kraftfahrzeug und für die Vorrichtung zur Insassengewichtsbestimmung gelten die vorherigen Bemerkungen für das Verfahren entsprechend. Der Sensor ist im Bereich der Radaufhängung an einer Dämpfereinheit, insbesondere an einem Stoßdämpfer des Kraftfahrzeugs angeordnet, so dass ein Federweg der Fahrzeugkarosserie erfassbar ist. Dies ermöglicht eine Erfassung statischer Lasten und der während der Fahrt auftretenden dynamischen Lasten.

Zur Erfassung des Einsteigens des zumindest einen Fahrzeuginsassen ist in bevorzugten Ausführungsbeispielen jeweils zumindest ein weiterer Sensor vorgesehen. Damit ist insbesondere der erste und/oder der zweite Zeitpunkt zur Bestimmung des ersten und/oder des zweiten Gewichtswerts erfassbar.

In einem Ausführungsbeispiel ist zumindest einer der weiteren Sensoren als elektromagnetische Erfassungseinrichtung, insbesondere als Infrarot- oder Funkempfänger, ausgebildet, die einen auf die unmittelbare Umgebung des Kraftfahrzeugs bezogenen Erfassungsbereich aufweist. Beispielsweise ist der so ausgebildete weitere Sensor Teil der Zentralverriegelung des Kraftfahrzeugs. Mittels des weiteren Sensors ist ein Signal einer tragbaren und zur Zugriffskontrolle vorgesehenen Bedieneinheit erfassbar. Die Betätigung der tragbaren Bedieneinheit ist mit dem Entsperren des zumindest einen Sperrmittels des Kraftfahrzeugs und damit mit dem unmittelbar bevorstehenden Einsteigen des zumindest einen Fahrzeuginsassen verknüpft. Der erste Zeitpunkt wird mit der Betätigung der tragbaren Bedieneinheit verknüpft.

In einem alternativen Ausführungsbeispiel ist die elektromagnetische Erfassungseinrichtung dazu ausgebildet, die Anwesenheit einer tragbaren Identifikationseinheit, welche insbesondere als passiver Transponder in einem Schlüsselanhänger integriert sein kann, zur Bestimmung des ersten und/oder des zweiten Zeitpunkts im Erfassungsbereich zu erfassen. So kann beispielsweise der erste Zeitpunkt bei Annäherung des Fahrzeuginsassen an das Kraftfahrzeug automatisch bestimmt werden und somit das Verfahren zur Insassengewichtsbestimmung automatisch eingeleitet werden. Wird entsprechend die Anwesenheit der tragbaren Identifikationseinheit im Fahrzeuginnenraum detektiert, so ist der zweite Zeitpunkt bestimmt.

In einem weiteren Ausführungsbeispiel ist zumindest einer der weiteren Sensoren zur Erfassung des ersten und/oder des zweiten Zeitpunkts derart ausgebildet, dass ein Öffnungszustand zumindest einer der Fahrzeugtüren und/oder ein Zustand des zumindest einen der Fahrzeugtür zugeordneten Sperrmittels überprüfbar ist. Dementsprechend ist der weitere Sensor als Türkontaktsensor oder als Türschlosssensor erfassbar. Somit ist insbesondere die Anzahl der sich beim Einsteigen der Fahrzeuginsassen öffnenden und schließenden Fahrzeugtüren bestimmbar, so dass zumindest Plausibilitätsannahmen über die Anzahl der eingestiegenen Fahrzeuginsassen gemacht werden können. Diese Informationen können insbesondere zur Ermittlung der Gewichtsverteilung auf den einzelnen Fahrzeugsitzen bzw. Fahrzeugplätzen genutzt werden, so dass anhand der erfassten Änderung des Gewichtswerts individuelle Insassengewichte ermittelbar sind.

In einem bevorzugten Ausführungsbeispiel ist zumindest einer der weiteren Sensoren als optische Erfassungseinrichtung; insbesondere als Kamera, ausgebildet. Die optische Erfassungseinrichtung erfasst den Fahrzeuginnenraum derart, dass das Einsteigen der Fahrzeuginsassen bestimmbar ist. Vorzugsweise ist anhand der von der optischen Erfassungseinrichtung gelieferten optischen Daten bestimmbar, welche Fahrzeugsitze bzw. welche Fahrzeugsitzplätze im Fahrzeuginnenraum von Fahrzeuginsassen eingenommen sind. Entsprechend ist anhand der optischen Daten, gegebenenfalls unter Verwendung einer entsprechend ausgebildeten Bilderfassung, die Größe der einzelnen Fahrzeuginsassen bestimmbar, was plausible Rückschlüsse auf die Insassengewichte der Fahrzeuginsassen zulässt. Insbesondere lassen sich mittels der optischen Erfassungseinrichtung Fehlzuordnungen von Insassengewichten vermeiden, die fälschlicherweise einem auf dem Fahrzeugsitz befindlichen Gepäckstück verursacht sind.

Zur genauen Ermittlung der Gewichtsverteilung sind in den Fahrzeugsitzen bzw. in den Fahrzeugsitzplätzen Sitzplatzbelegungssensoren zur Erfassung der Sitzbelegung im Kraftfahrzeug vorgesehen. Die Auswertung der von den Sitzplatzbelegungssensoren erzeugten Daten erleichtern insbesondere die Bestimmung der Gewichtsverteilung im Fahrzeuginnenraum, wenn beispielsweise mehrere Fahrzeuginsassen in das Kraftfahrzeug gleichzeitig eingestiegen sind.

Die zur Erfassung der ersten und zweiten Gewichtswerte vorgesehenen Sensoren sind vorzugsweise an allen Radaufhängungen, welche das Kraftfahrzeug aufweist, angeordnet, sodass die auf die Fahrzeugkarosserie einwirkenden dynamischen Lasten präzise und genau erfassbar sind. Dabei messen die Sensoren beispielsweise Federwege, sodass das Schwingungsverhalten der Fahrzeugkarosserie präzise bestimmbar ist. Der zumindest eine Sensor ist mit der Auswerteeinheit verbunden, die dazu ausgebildet ist, das Schwingungsverhalten der Fahrzeugkarosserie, insbesondere hinsichtlich der auftretenden Schwingungsmoden durchzuführen. Dies ermöglicht die Ermittlung der Gewichtsverteilung im Fahrzeuginnenraum, insbesondere der Sitzbelegung und der einzelnen Insassengewichte.

Zur Vereinfachung der Analyse der dynamischen Lasten ist die Auswerteeinheit mit einer Speichereinheit verbunden, auf der die Fahrparameterwerte und/oder die insassenbezogenen Parameterwerte abspeicherbar sind. Damit ist erreicht, dass insbesondere ein während einer vergangenen Fahrt ermittelter Wert für das Insassengewicht und/oder zumindest ein während der vergangenen Fahrt erfasster Wert für die dynamische Last hinterlegbar ist. Dies ermöglicht plausible Annahmen über mögliche Gewichtsverteilungen, welches die Auswertung der aktuell erfassten sensorischen Daten zur Bestimmung des Insassengewichts, insbesondere zur Ermittlung der Gewichtsverteilung, erheblich erleichtert.

Die Auswerteeinheit ist mit zumindest einer Steuereinheit des reversiblen oder irreversiblen Insassenschutzmittels verbunden. Vorzugsweise ist die Auswerteeinheit mit allen Steuereinheiten der im Kraftfahrzeug vorhandenen Insassenschutzmittel verbunden, sodass das jeweilige Insassenschutzmittel in Abhängigkeit des zugeordneten Insassengewichts ansteuerbar ist. Die gewichtsabhängige Ansteuerung des Insassenschutzmittels verringert die Verletzungsgefahr von Fahrzeuginsassen, die insbesondere bei der Auslösung des Insassenschutzmittels besteht.

Weitere Vorteile und Einzelheiten der Erfindung werden im Folgenden anhand von Ausführungsbeispielen und unter Bezugnahme auf die Zeichnungen erläutert. Dabei zeigen:
- Fig. 1: eine schematische Draufsicht eines Kraftfahrzeugs mit einer Vorrichtung zur Insassengewichtsbestimmung gemäß einem ersten Ausführungsbeispiel,
- Fig. 2: eine schematische Draufsicht des Kraftfahrzeugs mit einer Vorrichtung zur Insassengewichtsbestimmung gemäß einem zweiten Ausführungsbeispiel, und
- Fig. 3: eine schematische Draufsicht des Kraftfahrzeugs mit einer Vorrichtung zur Insassengewichtsbestimmung gemäß einem dritten Ausführungsbeispiel.

Einander entsprechende Teile sind in allen Figuren mit den gleichen Bezugszeichen versehen.

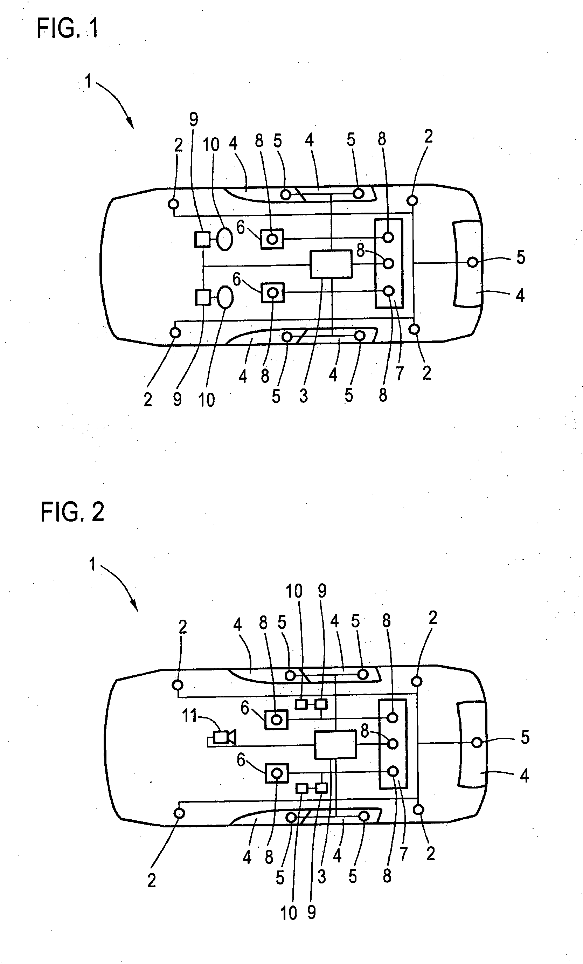

Fig. 1 zeigt eine schematische Draufsicht eines Kraftfahrzeugs 1. Das Kraftfahrzeug 1 weist eine Fahrzeugkarosserie und ein Fahrwerk auf. Eine auf das Fahrwerk einwirkende Last ist mittels Sensoren 2, welche in den Bereichen der Radaufhängungen zwischen dem Fahrwerk und der selbsttragenden Fahrzeugkarosserie angeordnet sind.

Dabei ist die statische Last, welche auf das Fahrwerk einwirkt, vom Gewicht eines Fahrzeugaufbaus, einer Zuladung und der Summe von Insassengewichten bestimmt.

Zur Gewichtsbestimmung und zur Bestimmung von während der Fahrt auf die Fahrzeugkarosserie einwirkenden dynamischen Lasten sind mittels der Sensoren 2 entsprechende Federwege von als Stoßdämpfer ausgebildeten Dämpfereinheiten des Kraftfahrzeugs 1 erfassbar. Die Sensoren 2 sind mit einer Auswerteeinheit 3 verbunden, welche zur Bestimmung eines Insassengewichts vorgesehen ist. Das Kraftfahrzeug 1 weist ferner Fahrzeugtüren 4 auf, die mit weiteren Sensoren 5 versehen sind, die als Türkontaktsensoren ausgebildet sind. Mittels den Türkontaktsensoren ist ein Öffnungszustand des Kraftfahrzeugs 1 erfassbar. Die weiteren Sensoren 5 stehen in einer Wirkverbindung mit der Auswerteeinheit 3, sodass beim Öffnen einer der Fahrzeugtüren 4 von dem dazu zugeordneten Türkontaktsensor ein entsprechendes Signal an die Auswerteeinheit 3 zuführbar ist. Somit sind zumindest plausible Annahmen über die Anzahl der einsteigenden Fahrzeuginsassen möglich.

Beim Einsteigen der Fahrzeuginsassen in das Kraftfahrzeug 1 ändert sich die auf das Fahrwerk einwirkende Last, welche mittels der Sensoren 2 erfassbar ist, um die Summe der Insassengewichte der einsteigenden Fahrzeuginsassen. Zur Bestimmung der Gewichtsverteilung innerhalb eines Fahrzeuginnenraums sind Fahrzeugsitze 6 bzw. Sitzplätze einer Rücksitzbank 7 mit Sitzbelegungssensoren 8, welche in dem hier dargestellten Ausführungsbeispiel als Gurtschlosssensoren nicht näher dargestellter Sicherheitsgurte ausgebildet sind, ausgestattet. Anhand der Daten, welche von den Sensoren 2, den weiteren Sensoren 5 und den Sitzbelegungssensoren 8 bereitgestellt werden, ist das individuelle Insassengewicht des auf dem Fahrzeugsitz 6 bzw. auf dem Fahrzeugsitzplatz befindlichen Fahrzeuginsassen von der Auswerteeinheit 3 ermittelbar. Das so ermittelte Insassengewicht bzw. die so ermittelten Insassengewichte sind Steuereinheiten 9 von irreversiblen Insassenschutzmittel 10, die hier als pyrotechnisch auslösbare Airbags ausgeführt sind, zuführbar. Dies ermöglicht eine Auslösung des irreversiblen Insassenschutzmittels 10 in Abhängigkeit des ermittelten Insassengewichts.

Fig. 2 zeigt ein zweites Ausführungsbeispiel der Vorrichtung zur Insassengewichtsbestimmung, welche im Wesentlichen dem bereits in Fig. 1 gezeigten ersten Ausführungsbeispiel entspricht. Das zweite Ausführungsbeispiel weist einen weiteren Sensor 5 auf, der als optische Erfassungseinrichtung 11 ausgebildet ist und den Fahrzeuginnenraum des Kraftfahrzeugs 1 erfasst. Die optische Erfassungseinrichtung 11 ist mit der Auswerteeinheit 3 verbunden, die zur Auswertung von optischen Bilddaten ausgebildet ist. Dazu ist eine entsprechende Bilderkennungssoftware in der Auswerteeinheit 3 implementiert. Anhand von optisch erfassten Daten ist eine Größenbestimmung der einsteigenden Fahrzeuginsassen ermöglicht, welche bei der Bestimmung des Insassengewichts mittels der Auswerteeinheit 3 berücksichtigt wird.

Das Insassenschutzmittel 10 des zweiten Ausführungsbeispiels ist als reversibler Gurtstraffer ausgebildet. Der Gurtstraffer ist in Abhängigkeit des ermittelten Insassengewichts ansteuerbar, sodass zu große auf den Fahrzeuginsassen einwirkende Kräfte bei der Auslösung vermeidbar sind.

Die Sitzbelegungssensoren 8 des zweiten Ausführungsbeispiels sind als kapazitive Sensoren, welche in den Fahrzeugsitzen 6 bzw. in der Rücksitzbank 7 verbaut sind, ausgeführt. Mittels dieser kapazitiven Sensoren ist ein auf eine Sitzfläche des Fahrzeugsitzes 6 bzw. der Rücksitzbank 8 einwirkender Druck erfassbar, sodass die Sitzbelegung im Kraftfahrzeug bestimmbar ist.

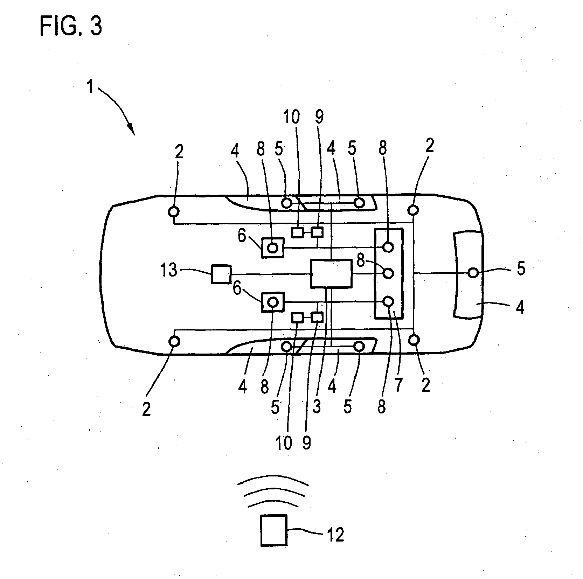

Fig. 3 zeigt ein drittes Ausführungsbeispiel der Erfindung, bei dem wesentliche Komponenten denen der bereits beschriebenen und in Figuren 1 und 2 gezeigten Ausführungsbeispielen entsprechen.

Bei dem dritten Ausführungsbeispiel ist eine externe und tragbare Bedieneinheit 12, welche zur Zugangskontrolle ausgebildet ist, vorgesehen. Mittels der Bedieneinheit 12 ist bei benutzerseitiger Betätigung ein entsprechendes Signal zum Entsperren des Kraftfahrzeugs 1 emittierbar. Den Fahrzeugtüren 4 sind in nicht näher dargestellter Weise Sperrmittel zugeordnet, die mittels der Betätigung der externen Bedieneinheit 12 ver- und entriegelbar sind. Zur Erfassung des von der Bedieneinheit 12 emittierten Signals ist einer der weiteren Sensoren 5 als Funkempfänger 13 ausgebildet.

Bei einem Verfahren zur Insassengewichtsbestimmung wird die auf das Fahrwerk einwirkende Last zu einem ersten Zeitpunkt als erster Gewichtswert erfasst und entsprechend zu einem zweiten Zeitpunkt als zweiter Gewichtswert erfasst. Der erste Zeitpunkt wird derart bestimmt, dass dieser vor dem Einsteigen des Fahrzeuginsassens liegt. Dabei wird der erste Zeitpunkt dadurch definiert, dass das Kraftfahrzeug von einem geschlossenen Zustand, in dem alle Fahrzeugtüren 4 geschlossen und verriegelt sind, in einen teilgeöffneten Zustand übergeht, in dem zumindest eine der Fahrzeugtüren 4 entriegelt und geöffnet ist.

Der zweite Zeitpunkt wird entsprechend dadurch bestimmt, dass das Kraftfahrzeug 1 von dem teilgeöffneten Zustand zurück in den geschlossenen Zustand übergeht.

Zur Bestimmung des ersten und des zweiten Zeitpunkts werden Daten, welche von den weiteren Sensoren 5 geliefert werden, ausgewertet.

Anhand der Differenz des ersten Gewichtswerts von dem zweiten Gewichtswert wird zunächst die Summe der Insassengewichte der eingestiegenen Fahrzeuginsassen bestimmt. Anschließend wird jedes individuelle Insassengewicht bestimmt und den Fahrzeugsitzen 6 bzw. den Fahrzeugplätzen zugeordnet. Dabei werden insbesondere die Signale, welche von den Sitzplatzsensoren 8 geliefert werden, ausgewertet. Zusätzlich werden zur Auswertung Fahrparameter und personenbezogene Parameter ausgewertet, welche bei einer vorherigen Fahrt bestimmt worden sind und auf einer nicht näher dargestellten Speichereinheit der Auswerteeinheit 3 hinterlegt sind. Diese Fahrparameterwerte bzw. personenbezogenen Parameterwerte liefern plausible Annahmen für die Gewichtsverteilung im Fahrzeuginnenraum. Insbesondere charakterisieren die Werte für die Fahrparameter das Schwirigungsverhalten der Fahrzeugkarosserie bzw. die während der Fahrt typischerweise auftretenden dynamischen Lasten.

Die dynamischen Lasten werden während der Fahrt mittels der Sensoren 2 erfasst und hinsichtlich der Gewichtsverteilung ausgewertet. Dies geschieht anhand einer Analyse der auftretenden Schwingungen der Fahrzeugkarosserie unter Berücksichtigung der hinterlegten Fahrparameter und personenbezogenen Parameter.

In Ausführungsbeispielen, in denen optische Erfassungseinrichtungen 11 vorgesehen sind, wird eine Größenbestimmung der einsteigenden Fahrzeuginsassen mittels einer Bilderkennung durchgeführt. Daraus werden zusätzliche plausible Annahmen über die einzelnen Insassengewichte abgeleitet werden, welche bei der Bestimmung der Gewichtsverteilung berücksichtigt werden.

Es versteht sich, dass die hier beschriebenen Ausführungsbeispiele lediglich beispielhaft und nicht einschränkend aufzufassen sind. Insbesondere ist vorgesehen, die zur Bestimmung des Einsteigevorgangs der Fahrzeuginsassen vorgesehenen Komponenten, welche insbesondere in den Fig. 1 bis 3 gezeigt sind, anderweitig geeignet zu kombinieren.

## Patentansprüche

1. Verfahren zur Insassengewichtsbestimmung zumindest eines Fahrzeuginsassen eines Kraftfahrzeugs (1) mit einer auf einem Fahrwerk aufgebauten und darauf lastenden Fahrzeugkarosserie, wobei eine auf das Fahrwerk einwirkende Last zu einem vor einem Einsteigen des zumindest einen Fahrzeuginsassen in das Kraftfahrzeug (1) liegenden ersten Zeitpunkt als erster Gewichtswert erfasst wird und die auf das Fahrwerk einwirkende Last zu einem nach dem Einsteigen des zumindest einen Fahrzeuginsassen in das Kraftfahrzeug (1) liegenden zweiten Zeitpunkt als zweiter Gewichtswert erfasst wird, wobei ein Insassengewicht des zumindest einen Fahrzeuginsassen unter Differenzbildung des ersten Gewichts von dem zweiten Gewicht ermittelt wird,
**dadurch gekennzeichnet,**
**dass** die auf das Fahrwerk einwirkende Kraft mit zumindest einem Sensor kontinuierlich erfasst wird, wobei ein Einsteigen eines Fahrzeuginsassen dann identifiziert wird, wenn sich der kontinuierlich erfasste Gewichtswert in einem vorgebbaren Zeitintervall hinreichend schnell ändert.

2. Verfahren nach Anspruch 1,
**dadurch gekennzeichnet,**
**dass** der erste Zeitpunkt dadurch definiert wird, dass das Kraftfahrzeug (1) von einem geschlossenen Zustand in einen zumindest teilgeöffneten Zustand übergeht.

3. Verfahren nach Anspruch 2,
**dadurch gekennzeichnet,**
**dass** der zweite Zeitpunkt dadurch definiert wird, dass das Kraftfahrzeug (1) von dem zumindest teilgeöffneten Zustand in den geschlossenen Zustand übergeht.

4. Verfahren nach einem der vorherigen Ansprüche,
**dadurch gekennzeichnet,**
**dass** zur Erfassung des ersten und/oder des zweiten Zeitpunkts der Öffnungszustand zumindest einer Fahrzeugtür (4) und/oder ein Zustand zumindest eines der Fahrzeugtür (4) zugeordneten Sperrmittels überprüft wird.

5. Verfahren nach einem der vorherigen Ansprüche,
**dadurch gekennzeichnet,**
**dass** zur Ermittlung einer Gewichtsverteilung eine Sitzbelegung oder während der Fahrt auftretende und auf die Fahrzeugkarosserie einwirkende dynamische Lasten erfasst und, gegebenenfalls unter Plausibilitätsannahmen, ausgewertet werden.

6. Verfahren nach Anspruch 5,
**dadurch gekennzeichnet,**
**dass** bei der Ermittlung der Gewichtsverteilung zuvor fahrzeugseitig abgespeicherten Fahrparameterwerte und/oder insassenbezogene Parameterwerte, insbesondere zur Bestimmung von Plausibilitätsannahmen zumindest ein bei einer vorherigen Fahrt ermittelter Wert für das Insassengewicht und/oder zumindest ein bei einer vorherigen Fahrt erfasster Wert für die dynamische Last berücksichtigt wird.

7. Verfahren nach einem der vorherigen Ansprüche,
**dadurch gekennzeichnet,**
**dass** zumindest ein Insassenschutzmittel in Abhängigkeit des ermittelten Insassengewichts angesteuert wird.

8. Kraftfahrzeug (1) umfassend eine auf einem Fahrwerk aufgebaute und darauf lastende Fahrzeugkarosserie mit einem Karosseriegewicht und einer Vorrichtung zur Insassengewichtsbestimmung zumindest eines Fahrzeuginsassen, welche zur Durchführung eines Verfahrens nach einem der vorherigen Ansprüche ausgebildet ist, wobei mittels zumindest einem Sensor (2) eine auf das Fahrwerk einwirkende Last erfassbar ist, welcher Sensor (2) mit einer Auswerteeinheit (3) zur Ermittlung des Insassengewichts des zumindest einen Fahrzeuginsassen in einer Wirkverbindung steht,
**dadurch gekennzeichnet,**
**dass** die auf das Fahrwerk einwirkende Kraft mit dem Sensor kontinuierlich erfasst wird, wobei ein Einsteigen eines Fahrzeuginsassen dann identifiziert wird, wenn sich der kontinuierlich erfasste Gewichtswert in einem vorgebbaren Zeitintervall hinreichend schnell ändert.

9. Kraftfahrzeug (1) nach Anspruch 8,
**dadurch gekennzeichnet,**
**dass** mittels zumindest einem weiteren Sensor (5) ein Einsteigen des zumindest einen Fahrzeuginsassen in das Kraftfahrzeug (1) bestimmbar ist, so dass mittels des zumindest einen Sensors (2) die auf das Fahrwerk einwirkende Last zu einem vor dem Einsteigen liegenden ersten Zeitpunkt als erster Gewichtswert und die auf das Fahrwerk-einwirkende Last zu einem nach dem Einsteigen liegenden zweiten Zeitpunkt als zweiter Gewichtswert erfassbar sind, wobei der erste und zweite Gewichtswert der Auswerteeinheit (3) zur Ermittlung des Insassengewichts des zumindest einen Fahrzeuginsassen zuführbar sind.

10. Kraftfahrzeug (1) nach Anspruch 9,
**dadurch gekennzeichnet,**
**dass** zumindest einer der weiteren Sensoren (5) einen auf eine Umgebung des Kraftfahrzeugs (1) bezogenen Erfassungsbereich aufweist und derart ausgebildet ist, dass ein Signal einer tragbaren Bedieneinheit (12) oder die Anwesenheit einer tragbaren Identifikationseinheit zur Bestimmung des ersten und/oder zweiten Zeitpunkts im Erfassungsbereich erfassbar ist.

11. Kraftfahrzeug (1) nach einem der Ansprüche 9 bis 10,
**dadurch gekennzeichnet,**
**dass** mittels zumindest einem der weiteren Sensoren (5) zur Erfassung des ersten und/oder des zweiten Zeitpunkts ein Öffnungszustand zumindest einer Fahrzeugtür (4) und/oder ein Zustand zumindest eines der Fahrzeugtür (4) zugeordneten Sperrmittels überprüfbar ist.

12. Kraftfahrzeug (1) nach einem der Ansprüche 9 bis 11,
**dadurch gekennzeichnet,**
**dass** zumindest einer der weiteren Sensoren (5) als optische Erfassungseinrichtung (11) ausgebildet ist, die einen Fahrzeuginnenraum optisch erfasst.

13. Kraftfahrzeug (1) nach einem der Ansprüche 8 bis 12,
**dadurch gekennzeichnet,**
**dass** zur Ermittlung einer Gewichtsverteilung Sitzplatzbelegungssensoren (8) zur Erfassung einer Sitzbelegung im Kraftfahrzeug (1) vorgesehen sind, welche mit der Auswerteeinheit (3) in einer Wirkverbindung stehen.

14. Kraftfahrzeug (1) nach einem der Ansprüche 8 bis 13,
**dadurch gekennzeichnet,**
**dass** mittels des zumindest einen Sensors (2) eine während der Fahrt auftretende und auf die Fahrzeugkarosserie einwirkende dynamische Last erfassbar ist.

15. Kraftfahrzeug (1) nach einem der Ansprüche 8 bis 14,
**dadurch gekennzeichnet,**
**dass** die Auswerteeinheit (3) mit einer Speichereinheit verbunden ist, auf der Fahrparameterwerte und/oder insassenbezogene Parameterwerte, insbesondere ein während der Fahrt ermittelter Wert für das Insassengewicht und/oder zumindest ein während der Fahrt erfasster Wert für die dynamische Last abspeicherbar sind.

16. Kraftfahrzeug (1) nach einem der Ansprüche 8 bis 15,
**dadurch gekennzeichnet,**
**dass** die Auswerteeinheit mit zumindest einer Steuereinheit (9) eines reversiblen oder irreversiblen Insassenschutzmittels (10) derart verbunden ist, dass das Insassenschutzmittel (10) in Abhängigkeit des ermittelten Insassengewichts des zumindest einen Fahrzeuginsassen ansteuerbar ist.

## Claims

1. Method for determining the weight of at least one occupant of a motor vehicle (1) having a vehicle body assembled on the chassis and pressing down on said chassis, wherein a load acting on the chassis at a first time point occurring before the at least one occupant has got into the motor vehicle (1) is detected as a first weight value and the load acting on the chassis at a second time point occurring after the at least one occupant has got into the motor vehicle (1) is detected as a second weight value, the weight of the at least one occupant of the vehicle being determined by finding the difference between the first weight and the second weight, **characterised in that** the force acting on the chassis is continuously detected by means of at least one sensor, while the entry of an occupant into a vehicle is identified when the continuously detected weight value changes sufficiently quickly within a predefinable time interval.

2. Method according to claim 1, **characterised in that** the first time point is defined by the motor vehicle (1) changing from a closed state into an at least partially opened state.

3. Method according to claim 2, **characterised in that** the second time point is defined by the motor vehicle (1) changing from the at least partially opened state into the closed state.

4. Method according to one of the preceding claims, **characterised in that**, in order to determine the first and/or second time point, the state of opening of at least one vehicle door (4) and/or a state of at least one locking means assigned to the vehicle door (4) is verified.

5. Method according to one of the preceding claims, **characterised in that**, in order to determine a weight distribution, the occupancy of a seat or dynamic loads occurring during the journey and acting on the vehicle body are detected and evaluated, optionally using plausibility assumptions.

6. Method according to claim 5, **characterised in that**, when determining the weight distribution, driving parameters and/or occupant-related parameters previously stored by the vehicle are taken into account, and in particular, in order to determine plausibility assumptions, at least one value determined during a previous journey is taken into consideration for the weight of the occupant or occupants and/or at least one value for the dynamic load detected during a previous journey is taken into consideration.

7. Method according to one of the preceding claims, **characterised in that** at least one occupant protection means is controlled as a function of the weight determined for the occupant or occupants.

8. Motor vehicle (1) comprising a vehicle body assembled on a chassis and pressing down onto it, having a body weight and a device for determining the weight of at least one vehicle occupant, which is configured to carry out a method according to one of the preceding claims, wherein a load acting on the chassis can be detected by at least one sensor (2), said sensor (2) being operatively connected to an evaluation unit (3) for determining the weight of the at least one occupant of the vehicle, **characterised in that** the force acting on the chassis is continuously detected by the sensor, and the entry of an occupant into the vehicle is identified when the continuously detected weight value changes sufficiently quickly within a predeterminable time interval.

9. Motor vehicle (1) according to claim 8, **characterised in that** the entry of the at least one vehicle occupant into the motor vehicle (1) can be determined by means of at least one further sensor (5), so that by means of the at least one sensor (2) the load acting on the chassis can be detected at a first time point occurring before the entry, as a first weight value, and the load acting on the chassis at a second time point occurring after the entry can be detected as a second weight value, the first and second weight values being capable of being supplied to the evaluation unit (3) in order to determine the weight of the at least one vehicle occupant.

10. Motor vehicle (1) according to claim 9, **characterised in that** at least one of the further sensors (5) comprises a detection range based on an environment of the motor vehicle (1) and is configured so that a signal from a portable operating unit (12) or the presence of a portable identification unit can be detected in the detection range, in order to determine the first and/or second time point.

11. Motor vehicle (1) according to one of claims 9 to 10, **characterised in that** a state of opening of at least one vehicle door (4) and/or a state of at least one locking means assigned to the vehicle door (4) can be verified by means of at least one of the further sensors (5) in order to detect the first and/or second time point.

12. Motor vehicle (1) according to one of claims 9 to 11, **characterised in that** at least one of the further sensors (5) is configured as an optical detecting means (11) which optically detects the interior of a vehicle.

13. Motor vehicle (1) according to one of claims 8 to 12, **characterised in that**, in order to determine a weight distribution, seat occupancy sensors (8) for detecting the state of occupation of a seat in the motor vehicle (1) are provided which are operatively connected to the evaluation unit (3).

14. Motor vehicle (1) according to one of claims 8 to 13, **characterised in that** a dynamic load occurring during the journey and acting on the vehicle body can be detected by means of the at least one sensor (2).

15. Motor vehicle (1) according to one of claims 8 to 14, **characterised in that** the evaluation unit (3) is connected to a memory unit for storing driving parameters and/or occupant-related parameters, particularly a value for the occupant weight determined during the journey and/or at least one value for the dynamic load detected during the journey.

16. Motor vehicle (1) according to one of claims 8 to 15, **characterised in that** the evaluation unit is connected to at least one control unit (9) of a reversible or irreversible occupant protection means (10) such that the occupant protection means (10) can be controlled as a function of the weight detected for the at least one occupant of the vehicle.

## Revendications

1. Procédé de détermination de poids d'occupants d'au moins un occupant d'un véhicule automobile (1) avec une carrosserie de véhicule montée sur un châssis et chargeant celui-ci, une charge qui agit sur le châssis étant acquise comme première valeur de poids à un premier instant situé avant la montée d'au moins un occupant de véhicule dans le véhicule automobile (1) et la charge qui agit sur le châssis étant acquise comme deuxième valeur de poids à un deuxième instant situé après la montée d'au moins un occupant de véhicule dans le véhicule automobile (1), un poids d'occupant de l'au moins un occupant de véhicule étant déterminé en soustrayant le premier poids du deuxième poids,
**caractérisé en ce que** la force qui agit sur le châssis est acquise en continu avec au moins un capteur, une montée d'un occupant de véhicule étant alors identifiée lorsque la valeur de poids acquise en continu varie suffisamment rapidement dans un intervalle de temps pouvant être prescrit.

2. Procédé selon la revendication 1, **caractérisé en ce que** le premier instant est défini par le fait que le véhicule automobile (1) passe d'un état fermé à un état au moins partiellement ouvert.

3. Procédé selon la revendication 2, **caractérisé en ce que** le deuxième instant est défini par le fait que le véhicule automobile (1) passe de l'état au moins partiellement ouvert à l'état fermé.

4. Procédé selon l'une des revendications précédentes, **caractérisé en ce que**, pour la détection du premier et/ou du deuxième instant, l'état d'ouverture d'au moins une portière de véhicule (4) et/ou un état d'au moins un moyen de blocage associé à la portière de véhicule (4) sont vérifiés.

5. Procédé selon l'une des revendications précédentes, **caractérisé en ce que**, pour la détermination d'une répartition de poids, une occupation de siège ou des charges dynamiques apparaissant pendant le trajet et agissant sur la carrosserie de véhicule sont détectées et sont évaluées, le cas échéant quant à des hypothèses de vraisemblance.

6. Procédé selon la revendication 5, **caractérisé en ce que**, lors de la détermination de la répartition de poids, des valeurs de paramètres de marche et/ou des valeurs de paramètres se rapportant à des occupants, préalablement mémorisées du côté du véhicule, sont prises en compte, notamment pour la détermination d'hypothèses de vraisemblance au moins une valeur, déterminée lors d'un trajet antérieur, pour le poids d'occupant et/ou au moins une valeur, acquise lors d'un trajet antérieur, pour la charge dynamique.

7. Procédé selon l'une des revendications précédentes, **caractérisé en ce qu'**au moins un moyen de protection d'occupant est commandé en fonction du poids d'occupant déterminé.

8. Véhicule automobile (1) comprenant une carrosserie de véhicule montée sur un châssis et chargeant celui-ci avec un poids de carrosserie et un dispositif qui est destiné à la détermination de poids d'occupant d'au moins un occupant de véhicule et qui est conçu pour la mise en oeuvre d'un procédé selon l'une des revendications précédentes, une charge qui agit sur le châssis pouvant être acquise au moyen d'au moins un capteur (2), lequel capteur (2) est en liaison active avec une unité d'évaluation (3) pour la détermination du poids d'occupant de l'au moins un occupant,
**caractérisé en ce que** la force agissant sur le châssis est acquise en continu avec le capteur, la montée d'un occupant de véhicule étant alors identifiée lorsque la valeur de poids acquise en continu varie suffisamment rapidement dans un intervalle de temps pouvant être prescrit.

9. Véhicule automobile (1) selon la revendication 8, **caractérisé en ce que** la montée de l'au moins un occupant de véhicule dans le véhicule automobile (1) peut être déterminée au moyen d'au moins un autre capteur (5) de telle sorte que, au moyen de l'au moins un capteur (2), la charge agissant sur le châssis à un premier instant situé avant la montée peut être acquise comme première valeur de poids et la charge agissant sur le châssis à un deuxième instant situé après la montée peut être acquise comme deuxième valeur de poids, la première et la deuxième valeur de poids pouvant être envoyées à l'unité d'évaluation (3) pour déterminer le poids d'occupant de l'au moins un occupant de véhicule.

10. Véhicule automobile (1) selon la revendication 9, **caractérisé en ce qu'**au moins l'un des autres capteurs (5) comporte une zone d'acquisition se rapportant à un environnement du véhicule automobile (1) et est conçu de telle sorte qu'un signal d'une unité de commande portable (12) ou la présence d'une unité d'identification portable peut être détecté dans la zone d'acquisition pour la détermination du premier et/ou du deuxième instant.

11. Véhicule automobile (1) selon l'une des revendications 9 à 10, **caractérisé en ce que**, pour la détection du premier et/ou du deuxième instant, un état d'ouverture d'au moins une portière de véhicule (4) et/ou un état d'au moins un moyen de blocage associé à la portière de véhicule (4) peuvent être vérifiés au moyen d'au moins un des autres capteurs (5).

12. Véhicule automobile (1) selon l'une des revendications 9 à 11, **caractérisé en ce qu'**au moins un des autres capteurs (5) est conçu comme un dispositif de détection optique (11) qui détecte de façon optique un habitacle de véhicule.

13. Véhicule automobile (1) selon l'une des revendications 8 à 12, **caractérisé en ce que**, pour la détermination d'une répartition de poids, des capteurs d'occupation de siège (8) sont prévus pour la détection d'une occupation de siège dans le véhicule automobile (1) et sont en liaison active avec l'unité d'évaluation (3).

14. Véhicule automobile (1) selon l'une des revendications 8 à 13, **caractérisé en ce qu'**une charge dynamique apparaissant pendant le trajet et agissant sur la carrosserie de véhicule peut être détectée au moyen de l'au moins un capteur (2).

15. Véhicule automobile (1) selon l'une des revendications 8 à 14, **caractérisé en ce que** l'unité d'évaluation (3) est reliée à une unité de mémoire dans laquelle peuvent être mémorisées des valeurs de paramètres de marche et/ou des valeurs de paramètres se rapportant aux occupants, notamment une valeur déterminée pendant le trajet pour le poids d'occupant et/ou au moins une valeur détectée pendant le trajet pour la charge dynamique.

16. Véhicule automobile (1) selon l'une des revendications 8 à 15, **caractérisé en ce que** l'unité d'évaluation est reliée à au moins une unité de commande (9) d'un moyen de protection d'occupant réversible ou irréversible (10) de telle sorte que le moyen de protection d'occupant (10) peut être commandé en fonction du poids d'occupant déterminé de l'au moins un occupant de véhicule.
